# FASCICULE DE BREVET EUROPEEN

(11) **EP 1 104 124 B1**
(45) Date de publication et mention de la délivrance du brevet: **11.10.2006**
(21) Numéro de dépôt: 00403253.8
(22) Date de dépôt: 22.11.2000
(51) Int. Cl.: H04B 7/204

(54) **Système de routage de télécommunication par satellite**
Leitweglenkung in einem Satelliten Kommunikationssystem
Satellite telecommunication routing system

(30) Priorité: 29.11.1999 FR 9914974
(43) Date de publication de la demande: 30.05.2001
(73) Titulaire: ALCATEL, 75008 Paris (FR)
(72) Inventeur: Panzani, François, 31410 St. Sulpice sur Lèze (FR); Tossou, Pierre K., 31100 Toulouse (FR)
(74) Mandataire: Smith, Bradford Lee

(56) Documents cités:
- WO-A-99/43104
- US-A- 4 315 262

## Description

L'invention est relative à un système de télécommunication par satellite.

Les systèmes de télécommunication par satellite(s) se développent rapidement car ils nécessitent une infrastructure moins onéreuse que celle des systèmes câblés ou à communication hertzienne, notamment quand il s'agit de transmettre des communications à longue distance.

Un système de télécommunication par satellite, par exemple du type géostationnaire, comprend, à bord de l'engin spatial, un ensemble transpondeur comprenant des moyens d'antenne et des moyens répéteurs qui reçoivent les communications arrivant avec des ressources déterminées, par exemple en fréquence et en polarisation, et les transmettent, avec d'autres ressources, vers la destination prévue par la communication afin d'éviter des interférences entre émission et réception. Autrement dit, à une transmission on affecte un canal qui est constitué, dans un exemple, par deux couples fréquence/polarisation, à savoir une fréquence et une polarisation données pour la communication arrivant au satellite (lien montant) et un couple fréquence/polarisation différent pour la communication ré émise à partir du satellite (lien descendant).

Un système de télécommunication par satellite est d'autant plus performant que, pour une même capacité en communication, il consomme une énergie faible. En outre, il est préférable que les moyens à bord du satellite soient d'une constitution relativement simple et robuste afin de minimiser les risques de panne.

Les systèmes de transmission par satellite connus jusqu'à présent sont de deux types, à savoir un type à couverture globale d'une région et un type à couverture d'une région par zones ou "spots".

Dans le premier type, les moyens d'antenne du satellite ont un diagramme d'émission-réception tel qu'ils couvrent d'un seul tenant la région considérée. Cette région comprend, par exemple, plusieurs zones urbaines. Une connexion entre deux stations ou deux abonnés s'effectue ainsi de façon relativement aisée car ceux-ci se trouvent dans la même couverture d'antenne. Mais une couverture de grande étendue ne permet pas des performances optimales. Sur le lien montant, une large couverture donne un facteur de mérite (GT) faible, ce qui impose au sol l'usage de grandes antennes. Sur le lien descendant, une large couverture exige une consommation en énergie relativement importante pour fournir à la station de réception au sol une densité surfacique de puissance suffisante. Au surplus, à un instant donné, chaque fréquence ne peut être utilisée que pour deux transmissions, l'une avec une polarisation donnée et l'autre avec la polarisation croisée. Autrement dit, un tel système est très consommateur en bande de fréquence.

Dans le second type, le système d'antenne est tel qu'il divise la région en une pluralité de zones, chaque zone correspondant à un pays ou une partie d'un pays par exemple. Dans ce cas, à chaque zone est affecté un dispositif d'antenne dont les performances sont supérieures à celles du moyen d'antenne du premier type de système. Pour des transmissions ou communications d'une zone à une autre, il faut transmettre, à bord du satellite, ces communications d'un dispositif d'antenne à un autre. Ce transfert d'un dispositif d'antenne à un autre est effectué par un câblage permanent ou par une matrice de commutation.

Pour limiter le câblage ou la complexité de la matrice de commutation, les zones sont en nombre relativement limité, ce qui entraîne encore des dispositifs d'antenne de grande ouverture et donc des performances qui ne sont pas toujours optimisées. Par ailleurs, des liaisons permanentes entre dispositifs d'antenne ne permettent pas de s'adapter aux évolutions de trafic qui peuvent intervenir dans la région concernée. En effet, si dans une zone le trafic augmente de façon sensible après le lancement du satellite, les ressources arrivant au dispositif d'antenne correspondant à cette zone ne pouvant être modifiées et ces ressources ayant été prévues pour un trafic déterminé, il peut en résulter un mauvais fonctionnement par engorgement pour les communications arrivant à cette zone ou partant de cette zone.

Pour remédier à cet inconvénient, il est connu d'utiliser des matrices dynamiques de commutation à bord du satellite pour connecter entre eux les dispositifs d'antenne correspondant aux diverses zones, afin que les chemins et ressources dans la matrice correspondent à chaque instant au trafic demandé. Mais ce type de matrice dynamique implique une gestion complexe ainsi que des synchronisations compliquées, notamment entre le sol et le satellite. Le document WO 99/43109 décrit un système satellitaire utilisant de telles matrices. Le document EP 0 905 930 A2 décrit un système satellitaire DVB.

Toutefois, par rapport au type à couverture globale, le système de télécommunication à pluralité de zones présente l'avantage de permettre d'utiliser les mêmes ressources en fréquence et en polarisation notamment pour plusieurs zones, à condition cependant que ces zones soient suffisamment éloignées. En effet, une même fréquence et une même polarisation peuvent être utilisées pour atteindre deux zones distantes, la discrimination entre les deux communications utilisant les mêmes ressources étant effectuée par cette discrimination spatiale.

L'invention concerne un système de télécommunication du second type, c'est-à-dire dans lequel chaque région est divisée en zones. Elle permet, sans modification des moyens du système à bord du satellite, de tenir compte des variations possibles de trafic d'une zone à une autre. Elle permet aussi de réduire la complexité des moyens de liaison entre les dispositifs d'antenne à bord du satellite.

Le système de télécommunication selon l'invention est destiné à couvrir une région comprenant des zones denses et disjointes, et il est caractérisé en ce qu'à bord du satellite, ces zones isolées sont rassemblées en plusieurs groupes, chaque groupe utilisant les ressources en communication attribuées à l'ensemble de la région.

On rappelle ici que les ressources en communication sont, outre les bandes de fréquence des porteuses, la polarisation et les instants d'émission en cas d'utilisation de systèmes à accès multiples comme le FDMA ("frequency division multiple access" en langue anglaise), le TDMA ("Time Division Multiple Access" en langue anglaise) ou le CDMA ("Coded Division Multiple Access" en langue anglaise). Si les ressources disponibles sont la fréquence, la polarisation et un intervalle de temps, à chaque instant, une seule communication ou un seul paquet d'une communication pourra utiliser le triplet des valeurs fréquence, polarisation et intervalle de temps. Par contre, un autre paquet (ou une autre communication) pourra, dans le même moment, utiliser, par exemple, la même fréquence, une polarisation différente et le même intervalle de temps.

Chaque groupe de zones est considéré, du point de vue de l'attribution des ressources, comme une zone dans un système classique.

Ainsi, le routage d'une zone à une autre à bord du satellite s'effectue entre groupes et non entre zones, ce qui simplifie notablement la réalisation puisque le nombre de connexions peut être sensiblement réduit.

De préférence, la connexion entre groupes s'effectue de façon câblée. Le câblage constitue la réalisation la plus simple et la plus fiable.

La simplicité et la fiabilité résultent aussi du fait que le nombre de connexions est plus réduit que dans les systèmes antérieurs.

Dans un mode de réalisation préféré de l'invention, l'affectation des zones dans les groupes est telle que les trafics dans les divers groupes soient sensiblement égaux.

L'égalité des trafics entre les groupes est préférable car à chaque groupe est attribué l'ensemble des ressources. Ainsi, si dans un groupe une zone correspond à un trafic important, cette zone sera seule dans son groupe ou sera associée à des zones de faible trafic.

Autrement dit, on choisira les zones à grouper de façon à égaliser les trafics entre les divers groupes.

En cas d'augmentation de trafic dans une zone, on pourra lui affecter une bande de fréquences et/ou une attribution de temps plus importante et on affectera une bande de fréquences et/ou une attribution de temps plus réduits à la (ou aux) zone(s) dont le trafic est diminué.

Il est également possible, pour tenir compte des évolutions de trafic à l'intérieur de la région, de prévoir des moyens permettant de reconfigurer les groupes, c'est-à-dire des moyens permettant qu'une zone prévue initialement dans un groupe puisse être transférée dans un autre. Cette reconfiguration peut être effectuée à l'aide de moyens de commutation télécommandables.

Il est à noter que les zones d'un groupement peuvent avoir des répartitions géographiques quelconques. Il n'est pas indispensable que ces zones soient adjacentes ou proches.

La présente invention prévoit un ensemble d'émission-réception à bord d'un satellite pour un système de télécommunication à l'intérieur d'une région couverte par cet ensemble, la région comprenant des zones isolées, et l'ensemble recevant des communications d'une zone quelconque et les réémettant vers la même zone ou une autre zone grâce à des moyens de routage. Cet ensemble comporte des moyens pour rassembler les signaux des zones isolées en groupes, le routage s'effectuant entre groupes, et à chaque groupe est affecté l'ensemble des ressources en communication de la région.

Selon un mode de réalisation, les moyens de routage sont de type câblé.

Selon un mode de réalisation, l'affectation des zones dans les groupes est telle que les trafics dans les groupes soient sensiblement les mêmes.

Selon un mode de réalisation, l'ensemble comporte des moyens de commutation permettant de modifier la composition des groupes, de façon qu'au moins une zone puisse être transférée d'un groupe vers un autre.

Selon un mode de réalisation, les moyens pour rassembler les signaux de plusieurs zones en un groupe font partie des moyens d'antenne.

Selon un mode de réalisation, les moyens pour rassembler les signaux de plusieurs zones en un groupe font appel à un réseau formateur de faisceaux.

Selon un mode de réalisation, les moyens pour rassembler en un groupe les signaux de plusieurs zones font partie des moyens répéteurs.

Selon un mode de réalisation, les moyens de routage sont tels qu'ils affectent des ressources en communication de façon telle que les signaux reçus par un premier groupe d'un second groupe se distinguent, par des ressources différentes, des signaux reçus d'un troisième groupe.

Selon un mode de réalisation, les ressources affectées au groupe pour les interconnecter comprennent des bandes de fréquences.

Selon un mode de réalisation, les ressources comportent, en outre, la polarisation.

Selon un mode de réalisation, au moins certaines des zones correspondant à un même groupe sont géographiquement éloignées.

Selon un mode de réalisation, le nombre de zones dans un groupe est compris entre un et dix.

Selon un mode de réalisation, le nombre de groupes est égal à quatre.

D'autres caractéristiques et avantages de l'invention apparaîtront avec la description de certains de ses modes de réalisation, celle-ci étant effectuée en se référant aux dessins ci-annexés sur lesquels :
la figure 1 montre une région divisée en une pluralité de zones,
la figure 2 est un schéma expliquant le principe de fonctionnement d'un système de télécommunication connu dans lequel une région est divisée en une pluralité de zones,
la figure 3 est un schéma d'une matrice de commutation utilisable dans le système de la figure 2,
la figure 4 est un schéma illustrant de façon simplifiée un système conforme à l'invention,
la figure 5 montre un aspect du procédé conforme à l'invention,
la figure 6 est un schéma montrant encore un autre aspect du système selon l'invention,
la figure 7 est un schéma montrant une partie d'un mode de réalisation de système selon l'invention,
la figure 8 est un schéma analogue à celui de la figure 7 mais pour une variante, cette figure montrant en outre une reconfiguration du système selon l'invention, et
la figure 9 est un schéma analogue à celui de la figure 6 montrant une combinaison entre trois groupes et une couverture globale.

Dans un système de télécommunication classique par satellite, notamment de type géostationnaire, le satellite comporte un ensemble ou système d'antennes 16 (figure 2) couvrant une région 12 divisée en zones 14₁, 14₂, etc. Le problème à traiter ici est celui de zones denses, urbaines, disjointes et ayant des dimensions faibles de 150 à 400 Km de diamètre. A chaque zone urbaine terrestre correspond, à bord du satellite, un dispositif d'antenne respectivement 16₁, 16₂, 16₃, etc. Pour simplifier, on a représenté seulement quatre dispositifs d'antenne 16₁ à 16₄ et les quatre zones correspondantes 14₁ à 14₄ sur la figure 2.

Pour utiliser au mieux la bande des fréquences allouée au système de télécommunication, à chaque zone est affectée une partie ou la totalité de la bande de fréquences et au moins certaines des zones séparées peuvent utiliser la même bande.

Pour chaque transmission, on alloue un canal qui est, par exemple, constitué par deux couples fréquence/polarisation. De façon plus précise, pour un lien montant 18 (figure 2), on attribue une fréquence f₁, bien entendu comprise dans la bande allouée à la zone correspondante 14₁, et une polarisation, par exemple la polarisation verticale, et, pour le lien descendant 20, on alloue une fréquence f₂ choisie dans la bande allouée à la zone correspondante 14₂, et une polarisation verticale ou horizontale.

Les fréquences f₁ et f₂ sont habituellement différentes.

Les dispositifs d'antenne sont distincts pour les liens montant et descendant.

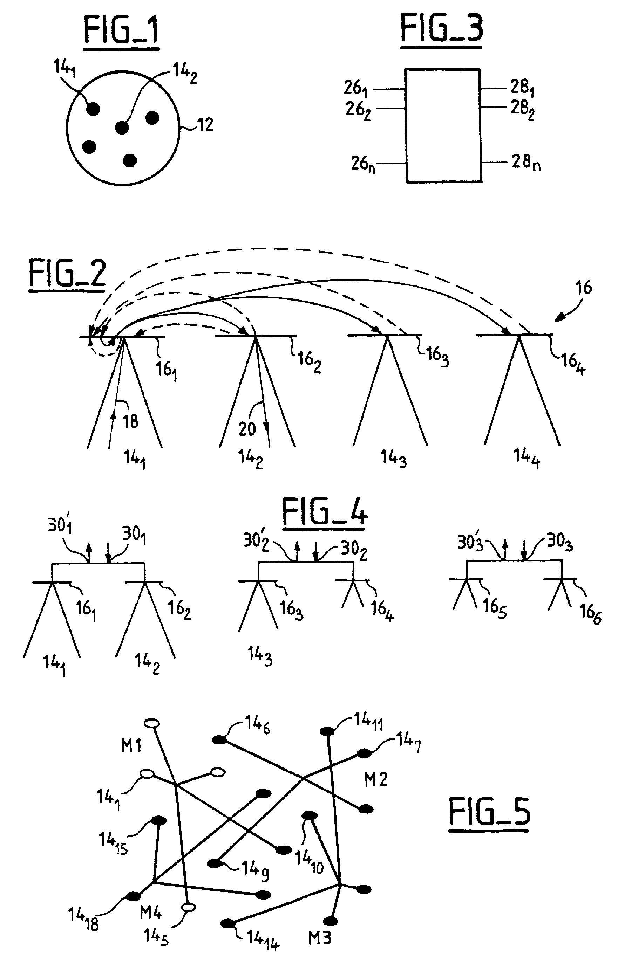

Pour relier les liens montant 18 et descendant 20, il faut, à bord du satellite, un moyen de connexion, ou routage, pour faire communiquer les dispositifs d'antenne 16₁ et 16₂. A cet effet, le transpondeur, qui transforme à bord du satellite les signaux reçus en des signaux émis, comporte un câblage ou une matrice de commutation (figure 3). Il est à noter que le câblage fait aussi intervenir la liaison entre liens montant et descendant d'une même zone. C'est pourquoi ce câblage ou la matrice de commutation relie aussi chaque dispositif 16ᵢ d'antenne de réception au dispositif d'antenne 16i d'émission de la même zone, et vice-versa.

Pour le routage, il faut qu'un signal capté par un dispositif d'antenne 16₁ puisse être acheminé vers l'un quelconque des autres dispositifs d'antenne. On a ainsi représenté en traits pleins sur la figure 2 le chemin du dispositif d'antenne 16₁ vers les autres dispositifs 16₂, 16₃, 16₄. Il faut aussi que chaque dispositif d'antenne puisse recevoir les signaux provenant de chacun des autres dispositifs d'antenne. Sur la figure 2, les chemins aboutissant au dispositif d'antenne 16₁ ont été représentés en traits interrompus.

Si ces moyens de connexion 24 sont du type câblé, c'est-à-dire s'ils ne sont pas modifiables par une télécommande après le lancement du satellite, ils sont adaptés pour un volume de trafic déterminé entre zones et supportent mal une évolution du trafic dans les diverses zones. Par exemple, si, quelque temps après le lancement du satellite, une zone, par exemple celle de référence 14₂, voit son trafic augmenter de façon notable, il peut se produire des congestions, car les liens du dispositif 16₂ avec les autres dispositifs d'antenne ne peuvent pas être modifiés.

Pour tenir compte des évolutions instantanées et à long terme du trafic, on fait quelquefois appel à une matrice de commutation 22 (figure 3) présentant en général autant d'entrées 26₁ à 26ₙ que de sorties 28₁ à 28ₙ. Dans cette matrice, on prévoit une pluralité de chemins. La ressource en fréquence ou en temps affectée à l'un des chemins peut être variable en fonction du trafic. La gestion, le plus souvent en temps réel, d'une telle matrice est particulièrement complexe. La commande de la matrice 22 exige soit une synchronisation complexe si le temps alloué est variable, soit des filtres (onéreux et complexes) de bande passante modifiable par télécommande.

Pour simplifier la réalisation des moyens de connexion 24, on a intérêt à prévoir des zones 14i de dimensions relativement importantes afin que le nombre de ces zones et donc le nombre de dispositifs d'antenne ne soit pas trop élevé, la complexité du câblage ou de la commutation augmentant avec ce nombre.

Pour permettre d'absorber des variations probables de trafic dans chaque zone et pour simplifier les connexions à bord du satellite, l'invention prévoit de rassembler en groupes le trafic correspondant à plusieurs zones et d'effectuer le routage entre groupes.

Dans le mode de réalisation préféré de l'invention, le choix des zones à grouper est déterminé en fonction du trafic dans chaque zone et de façon telle que, dans chaque groupe, on associe une ou plusieurs zones à trafic important à une ou plusieurs zones à trafic faible, le trafic d'ensemble étant sensiblement le même d'un groupe à un autre.

En outre, de préférence, les groupes sont reconfigurables, c'est-à-dire que des zones affectées à un groupe peuvent être affectées ultérieurement à un autre groupe.

Dans l'exemple très simplifié représenté sur la figure 4, on a groupé ensemble les dispositifs d'antenne 16₁ et 16₂ correspondant aux zones 14₁ et 14₂ qui forment ainsi un premier groupe. De même, les dispositifs d'antenne 16₃ et 16₄ forment un second groupe et les dispositifs d'antenne 16₅ et 16₆ forment un troisième groupe.

Les dispositifs d'antenne 16₁ et 16₂ sont connectés à une même entrée-sortie 30₁. De même les dispositifs d'antenne 16₃ et 16₄ sont reliés à une même entrée-sortie 30₂ et les dispositifs d'antenne 16₅ et 16₆ sont connectés à une entrée-sortie 30₃.

Ainsi les connexions sont effectuées d'un groupe à un autre et non entre dispositifs d'antenne, c'est-à-dire entre zones, ce qui simplifie la connexion ou commutation à bord du satellite.

L'ensemble de la bande de fréquence allouée à la région est affecté à chaque groupe et dans chaque groupe on applique les principes habituels de partage de fréquence, au lieu de les appliquer à chaque zone. Dans chaque groupe, une fréquence déterminée affectée de caractéristiques déterminées tels que la polarisation et/ou un code, ne peut être utilisée que pour une seule transmission.

Le nombre de zones dans un groupe est quelconque, par exemple compris entre 1 et 10. De même, la répartition géographique des zones rassemblées en un groupe peut être choisie à volonté, ces zones n'étant pas forcément toutes contiguës ou proches.

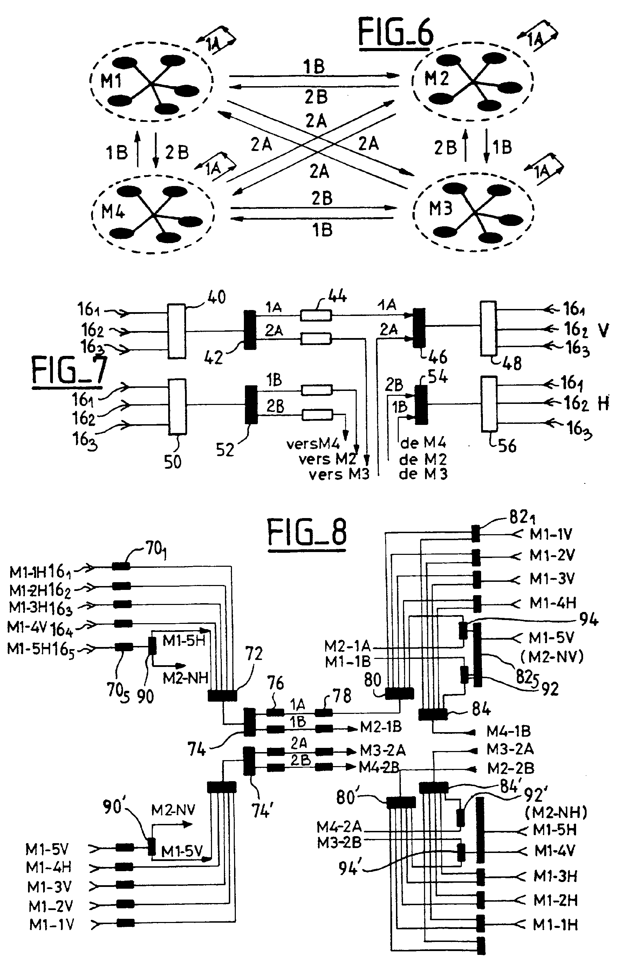

Ainsi, on a montré également de façon simplifiée, sur la figure 5, un exemple de groupement de zones urbaines. Dans cet exemple, on prévoit quatre groupes M1, M2, M3, M4. Le groupe M1 comprend cinq zones 14₁ à 14₅. Le groupe M2 comprend quatre zones 14₆ à 14₉. Le groupe M3 comprend cinq zones 14₁₀ à 14₁₄ et le groupe M4 comprend quatre zones 14₁₅ à 14₁₈.

La figure 6 est un schéma visant à expliquer le principe d'attribution des ressources en communication pour les communications à l'intérieur d'un même groupe ou pour les communications entre groupes. Dans cet exemple, la bande de fréquence allouée à une région est séparée en deux sous-bandes, respectivement 1 et 2, et on peut utiliser les polarisations verticale et horizontale de chaque sous-bande. Ainsi le symbole A correspond à la polarisation verticale et le symbole B à la polarisation horizontale.

On voit sur la figure 6 que pour une communication à l'intérieur de chaque groupe, d'une zone à la même zone ou d'une zone à une autre zone du même groupe on utilise la ressource 1A (sous-bande 1 et polarisation verticale). Pour une transmission du groupe M1 vers le groupe M2, on utilise la ressource 1 B, tandis que pour la transmission de M2 vers M1 on utilise la ressource 2B. Ce schéma, qui fait partie intégrante de la présente description, montre que le groupe d'origine de chaque transmission reçue par un groupe est clairement identifiable. Ainsi, pour le groupe M1, une communication reçue avec la ressource 1A correspond à une communication provenant du même groupe, une communication reçue avec la ressource 1 B correspond à une communication provenant du groupe M4, une communication reçue avec la ressource 2A provient du groupe M3, et une communication reçue avec la ressource 2B provient du groupe M2.

Si l'on ne fait pas appel à la ressource en polarisation, la bande de fréquences sera divisée en quatre sous-bandes.

Il est à noter que, dans l'exemple de la figure 6 où l'on prévoit quatre groupes, le nombre de transpondeurs est de 16. Ce nombre est sensiblement plus limité que dans l'état antérieur de la technique, où l'on prévoit des connexions de chaque zone individuelle à chaque zone individuelle.

Bien que jusqu'à présent on ait indiqué que le groupement s'effectue par connexion à des dispositifs d'antenne, il est à noter que le regroupement peut s'effectuer aussi au niveau des répéteurs. Le premier cas (rassemblement au niveau des dispositifs d'antenne) est représenté sur la figure 7, tandis que le second cas (rassemblement au niveau des répéteurs) est représenté sur la figure 8.

On se réfère tout d'abord à la figure 7. Cette figure montre la partie des moyens de connexion pour un groupe M1.

Dans cet exemple, le groupement est effectué grâce au réseau formateur de faisceau des moyens d'antenne.

On a supposé que l'on prévoit trois zones pour ce groupe M1 avec des dispositifs d'antenne 16₁, 16₂ et 16₃, le nombre de groupes étant de quatre et l'attribution des ressources en communication étant effectuée comme décrit en relation avec la figure 6.

Les signaux de polarisation verticale reçus par les dispositifs d'antenne 16₁, 16₂, 16₃ (provenant des zones 14₁, 14₂, 14₃) sont groupés par une première partie 40 du réseau formateur de faisceaux, qui les applique à un premier démultiplexeur d'entrée 42 à deux sorties. Sur la première de ces sorties sont dirigés les signaux utilisant la ressource 1A et sur la seconde sortie sont dirigés les signaux utilisant la ressource 2A. Les signaux de la ressource lA proviennent du groupe M1. Ils sont destinés au même groupe (figure 6). Ainsi, la première sortie du démultiplexeur 42 est reliée, par l'intermédiaire d'un amplificateur de puissance 44, a la première entrée d'un multiplexeur 46 de sortie. La seconde sortie du dé-multiplexeur 42, qui reçoit la ressource 2A, est dirigée vers le groupe M3.

La seconde entrée du multiplexeur 46 reçoit la ressource 2A. Il s'agit, comme présenté sur la figure 6, de signaux qui proviennent du groupe M3.

La sortie du multiplexeur 46 est dirigée vers chacun des dispositifs d'antenne d'émission 16₁, 16₂, 16₃. La répartition des signaux est effectuée grâce à une autre partie 48 du réseau formateur de faisceaux.

De même, les ressources en polarisation horizontale reçues par les dispositifs d'antenne 16₁, 16₂, 16₃ sont dirigées, encore par une autre partie 50 du réseau formateur de faisceaux, vers un dé-multiplexeur d'entrée 52 présentant deux sorties. Sur la première sortie apparaissent les ressource 1B et sur la seconde sortie apparaissent les ressources 2B. Ainsi, les signaux 1B de la première sortie du démultiplexeur d'entrée 52 sont dirigés vers le groupe M2 tandis que les signaux 2B de la seconde sortie sont dirigés vers le groupe M4.

Pour la réception des signaux de polarisation horizontale, on prévoit enfin un multiplexeur de sortie 54 présentant deux entrées sur lesquelles sont appliquées les ressources, respectivement 1B et 2B. Les ressources 1B proviennent du groupe M4 tandis que les ressources 2B proviennent du groupe M2. La sortie du multiplexeur 54 dirige les signaux vers les zones correspondantes, par émission à l'aide des dispositifs d'antenne 16₁, 16₂, 16₃, grâce à une répartition déterminée par une partie 56 du réseau formateur de faisceaux.

Dans cette réalisation, on prévoit pour l'émission un amplificateur de puissance 44 pour chaque ressource et, pour la réception, un amplificateur faible bruit (non montré) également pour chaque ressource.

Dans l'exemple représenté sur la figure 8, le groupement s'effectue dans l'ensemble répéteur et non dans l'ensemble antenne.

Sur la figure 8, on a aussi représenté seulement la partie de routage ou aiguillage des signaux relatifs au groupe M1. Ce groupe M1 comporte cinq zones avec des dispositifs d'antenne correspondants, 16₁ à 16₅. Également comme dans l'exemple de la figure 7, chaque groupe est divisé en deux sous-groupes.

Dans ce cas, le premier sous-groupe traite les signaux des zones 1, 2, 3, 4 et 5 avec, à la réception, la polarisation horizontale pour les signaux des zones 1, 2, 3 et 5 et la polarisation verticale pour les signaux de la zone 4. Ces signaux ont été notés respectivement M1-1 H, M1-2H, M1-3H, M1-4V et M1-5H.

Ce premier sous-groupe traite, pour l'émission, les signaux à émettre en polarisation croisée, c'est-à-dire les signaux de polarisation verticale pour les zones 1, 2, 3 et 5 et de polarisation horizontale pour la zone 4.

Dans le deuxième sous-groupe, on procède au traitement des autres signaux, c'est-à-dire, pour la réception, les polarisations verticales des zones 1, 2, 3 et 5 et la polarisation horizontale pour la zone 4 et, à l'émission, la polarisation horizontale pour les zones 1, 2, 3 et 5 et la polarisation verticale pour la zone 4.

Par ailleurs, dans cet exemple, on prévoit des moyens de commutation, pour que les signaux d'une zone puissent être réaffectés sur un autre groupe. Dans l'exemple représenté, c'est la zone 5 du groupe M1 qui est réaffectée dans le groupe M2.

Le dispositif d'antenne 16₁ recevant les signaux 1H (on rappelle ici qu'il s'agit de signaux provenant de la zone 1 du groupe M1 avec la polarisation horizontale) sont transmis par un récepteur 70₁ vers une première entrée d'un combineur 72 sous la forme d'un réseau formateur de faisceaux. Les autres entrées du combineur 72 reçoivent les signaux, respectivement 2H, 3H, 4V et 5H.

La sortie du combineur 72 est reliée à l'entrée d'un démultiplexeur 74 qui fournit, sur ses deux sorties, les ressources respectivement 1A et 1B. Ces ressources 1A et 1B sont chacune traitées par deux amplificateurs en série, respectivement 76 et 78, l'un de ces amplificateurs étant destiné au réglage du gain et l'autre amplificateur constituant un amplificateur de puissance.

La ressource 1A est appliquée à l'entrée d'un diviseur 80, constitué par un réseau formateur de faisceaux, qui divise la ressource 1A en cinq faisceaux dirigés vers les antennes d'émission 16₁ à 16₅ par l'intermédiaire des premières entrées des multiplexeurs, respectivement 82₁ à 82₅, dont chacun présente deux entrées. Les secondes entrées des multiplexeurs 82₁ à 82₅ sont reliées aux sorties respectives d'un autre diviseur 84 recevant sur son entrée la ressource 1 B provenant du groupe M4, conformément à la répartition représentée sur la figure 6.

La sortie du démultiplexeur 74 qui délivre la ressource 1B est dirigée, par l'intermédiaire de deux amplificateurs en série, analogues aux amplificateurs 76 et 78, vers le groupe M2, également en conformité avec la figure 6.

Le deuxième sous-groupe est de constitution analogue au premier sous-groupe. Sur la première sortie du démultiplexeur 74' de la partie de réception apparaît la ressource 2A qui est dirigée vers le groupe M3 et, sur la seconde sortie de ce même dé multiplexeur 74', apparaît la ressource 2B qui est dirigée vers le groupe M4.

Du côté de l'émission, le diviseur 84' reçoit, sur son entrée, la ressource 2A provenant du groupe M3 et le diviseur 80' reçoit sur son entrée la ressource 2B provenant du groupe M2.

Pour réaffecter la zone 5 du groupe M1 dans le groupe M2 de façon à ce qu'elle prenne le numéro N, on prévoit, du côté de la réception du premier sous-groupe, un commutateur 90 à une entrée et deux sorties. L'entrée du commutateur 90 reçoit les signaux du récepteur 70₅ et l'une des sorties est reliée, comme représenté, à une entrée du combineur 72, tandis que l'autre sortie est re liable, quand le commutateur est dans sa seconde position, à l'entrée d'un combineur correspondant du groupe M2. C'est pour cette raison que l'on a indiqué M2-NH sur cette seconde sortie.

De même, on prévoit un commutateur 90' dans le second sous-groupe qui, dans la position représentée, applique le signal 5V du groupe M1 sur une entrée du combineur 72' et qui, dans sa seconde position, applique le signal correspondant sur une entrée d'un combineur analogue du groupe M2.

Quand la zone 5 est affectée au groupe M2, à l'émission, les signaux NV (premier sous-groupe) de cette zone ainsi affectée au groupe M2 doivent correspondre à la répartition des ressources représentée sur la figure 6. On prévoit donc des commutateurs 92 et 94 qui permettent d'émettre, par le dispositif d'antenne correspondant, la ressource 1A du groupe M2 et la ressource 1B provenant du groupe M1.

De même, dans la partie d'émission du deuxième sous-groupe, on prévoit des commutateurs 92' et 94' permettant d'émettre, au lieu des signaux 5H du groupe M1, des signaux NH du groupe M2 avec les ressources 2A et 2B, les ressources 2A provenant du groupe M4 et les ressources 2B provenant du groupe M3.

Les divers commutateurs 90, 90', 92, 94, 92', 94', etc. sont commandables du sol. Ces commutateurs sont actionnés de temps en temps pour réaffecter les groupes, compte tenu d'une évolution lente du trafic.

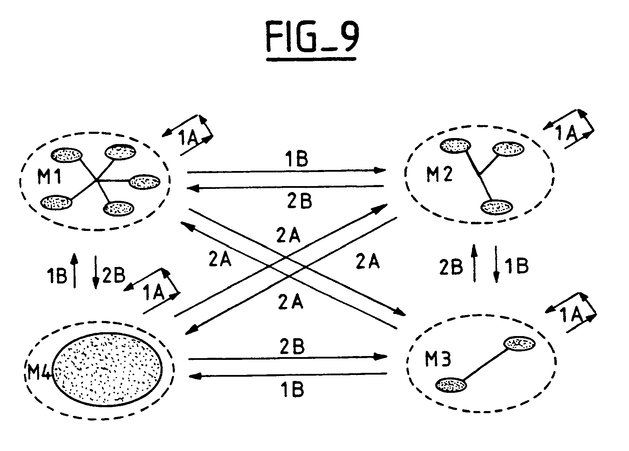

L'invention permet une connexion simple de zones isolées les unes par rapport aux autres. Elle permet également la connexion à une couverture globale classique. Ainsi, on a représenté sur la figure 9 trois groupes M1, M2 et M3 de zones isolées, alors que M4 représente la couverture globale qui est considérée, pour l'interconnexion, comme un groupe.

Dans une réalisation, les zones terrestres ont une forme sensiblement circulaire avec un diamètre compris entre 150 et 450 km, les transmissions étant effectuées en bande Ku. Ces zones sont de dimensions relativement faibles, ce qui permet un bon isolement afin de permettre une réutilisation des fréquences. Par ailleurs, une faible dimension de chaque zone est préférable, car les zones étant rassemblées sur une antenne de façon à former un groupe, chaque groupe ne doit pas être, dans l'ensemble, de trop grande dimension afin que le gain de l'antenne reste suffisant.

## Revendications

1. Ensemble d'émission-réception adapté à être utilisé à bord d'un satellite pour un système de télécommunication à l'intérieur d'une région (12) couverte par cet ensemble, la région comprenant une pluralité des zones (14ᵢ) dont certaines sont isolées, et l'ensemble recevant des communications d'une zone quelconque et les réémettant vers la même zone ou une autre zone grâce à des moyens de routage, **caractérisé en ce qu'**il comporte des moyens pour rassembler les signaux desdites zones en groupes de zones (M1, M2, M3, M4), le routage s'effectuant entre groupes de zones, et **en ce qu'**à chaque groupe de zones est affecté l'ensemble des ressources en communication de la région.

2. Ensemble selon la revendication 1, **caractérisé en ce que** les moyens de routage sont de type câblé.

3. Ensemble selon la revendication 1 ou 2 **caractérisé en ce que** l'affectation des zones dans les groupes est telle que les trafics dans les groupes soient sensiblement les mêmes.

4. Ensemble selon l'une quelconque des revendications 1 à 3, **caractérisé en ce qu'**il comporte des moyens de commutation permettant de modifier la composition des groupes, de façon qu'au moins une zone puisse être transférée d'un groupe vers un autre.

5. Ensemble selon l'une quelconque des revendications précédentes, **caractérisé en ce que** les moyens pour rassembler les signaux de plusieurs zones en un groupe font partie des moyens d'antenne.

6. Ensemble selon la revendication 5, **caractérisé en ce que** les moyens pour rassembler les signaux de plusieurs zones en un groupe font appel à un réseau formateur de faisceaux.

7. Ensemble selon l'une quelconque des revendications 1 à 4, **caractérisé en ce que** les moyens pour rassembler en un groupe les signaux de plusieurs zones font partie des moyens répéteurs.

8. Ensemble selon l'une quelconque des revendications précédentes, **caractérisé en ce que** les moyens de routage sont tels qu'ils affectent des ressources en communication de façon telle que les signaux reçus par un premier groupe (M1) d'un second groupe (M2) se distinguent, par des ressources différentes, des signaux reçus d'un troisième groupe.

9. Ensemble selon la revendication 8, **caractérisé en ce que** les ressources affectées au groupe pour les interconnecter comprennent des bandes de fréquences.

10. Ensemble selon la revendication 9, **caractérisé en ce que** les ressources comportent, en outre, la polarisation.

11. Ensemble selon l'une quelconque des revendications précédentes, **caractérisé en ce qu'**au moins certaines des zones correspondant à un même groupe sont géographiquement éloignées.

12. Ensemble selon l'une quelconque des revendications précédentes, **caractérisé en ce que** le nombre de zones dans un groupe est compris entre un et dix.

13. Ensemble selon l'une quelconque des revendications précédentes, **caractérisé en ce que** le nombre de groupes est égal à quatre.

## Claims

1. Transmit-receive system adapted to be used on board a satellite for a telecommunication system within a region (12) covered by that system, the region including a plurality of areas (14), some of which are isolated, the system receiving calls from any area and transmitting them to the same area or another area using routing means, **characterised in that** it includes means for combining the signals from said areas into groups of areas (M1, M2, M3, M4), routing being effected between groups of areas and **in that** each group of areas is allocated all of the communication resources of the region.

2. System according to claim 1, **characterised in that** the routing means are hardwired.

3. System according to claim 1 or 2, **characterised in that** the areas are allocated to the groups in such a manner that the traffic is substantially the same from one group to another.

4. System according to any of claims 1 to 3, **characterised in that** it includes switching means for modifying the composition of the groups so that at least one area can be transferred from one group to another.

5. System according to any preceding claim, **characterised in that** the means for grouping the signals of several areas are part of the antenna system.

6. System according to claim 5, **characterised in that** the means for grouping the signals of several areas use a beam-forming network.

7. System according to any of claims 1 to 4, **characterised in that** the means for grouping the signals from several areas are part of repeater means.

8. System according to any preceding claim, **characterised in that** the routing means allocate communication resources so that the signals received by a first group (M1) from a second group (M2) are distinguished from signals received from a third group by virtue of having different resources.

9. System according to claim 8, **characterised in that** the resources allocated to the group for interconnecting them include frequency bands.

10. System according to claim 9, **characterised in that** the resources further include polarisations.

11. System according to any preceding claim, **characterised in that** at least some of the areas corresponding to the same group are geographically far apart.

12. System according to any preceding claim, **characterised in that** the number of areas in a group is from 1 to 10.

13. System according to any preceding claim, **characterised in that** the number of groups is 4.

## Patentansprüche

1. Sende/Empfangseinheit zum Einsatz an Bord eines Satelliten für ein Telekommunikationssystem innerhalb eines von dieser Einheit abgedeckten Bereichs (12), wobei der Bereich eine Vielzahl von Zonen (14ᵢ) umfasst, von denen einige voneinander abgetrennt sind, und die Einheit Kommunikationen aus einer beliebigen Zone empfängt und diese mit Hilfe von Einrichtungen zur Leitweglenkung in die gleiche Zone oder in eine andere Zone überträgt, **dadurch gekennzeichnet, dass** sie Mittel zur Zusammenfassung der Signale aus den genannten Zonen in Zonengruppen (M1, M2, M3, M4) umfasst, wobei die Leitweglenkung zwischen Zonengruppen erfolgt, sowie **dadurch**, dass jeder Zonengruppe sämtliche Kommunikationsressourcen des Bereichs zugeordnet sind.

2. Einheit gemäß Anspruch 1, **dadurch gekennzeichnet, dass** die Einrichtungen zur Leitweglenkung miteinander verkabelt sind.

3. Einheit gemäß Anspruch 1 oder 2, **dadurch gekennzeichnet, dass** die Zuordnung der Zonen zu den Gruppen so erfolgt, dass die Verkehrsvolumen in den Gruppen etwa gleich sind.

4. Einheit gemäß einem der Ansprüche 1 bis 3, **dadurch gekennzeichnet, dass** sie Schalteinrichtungen umfasst, die die Möglichkeit bieten, die Zusammensetzung der Gruppen zu verändern, so dass mindestens eine Zone von einer Gruppe in eine andere verschoben werden kann.

5. Einheit gemäß einem der vorgenannten Ansprüche, **dadurch gekennzeichnet, dass** die Mittel zur Zusammenfassung der Signale mehrerer Zonen in einer Gruppe Bestandteil der Antenneneinrichtung sind.

6. Einheit gemäß Anspruch 5, **dadurch gekennzeichnet, dass** die Mittel zur Zusammenfassung der Signale mehrerer Zonen in einer Gruppe eine Bündelungsschaltung einsetzen.

7. Einheit gemäß einem der Ansprüche 1 bis 4, **dadurch gekennzeichnet, dass** die Mittel zur Zusammenfassung der Signale mehrerer Zonen Bestandteil der Empfangseinrichtungen sind.

8. Einheit gemäß einem der vorgenannten Ansprüche, **dadurch gekennzeichnet, dass** die Einrichtungen zur Leitweglenkung so ausgeführt sind, dass sie die Kommunikationsressourcen derart zuordnen, dass die von einer ersten Gruppe (M1) empfangenen Signale, die von einer zweiten Gruppe (M2) stammen, sich durch verschiedene Ressourcen von den Signalen unterscheiden, die von einer dritten Gruppe empfangen werden.

9. Einheit gemäß Anspruch 8, **dadurch gekennzeichnet, dass** die der Gruppe zur Verbindung untereinander zugeordneten Ressourcen Frequenzbänder umfassen.

10. Einheit gemäß Anspruch 9, **dadurch gekennzeichnet, dass** die Ressourcen unter anderem die Polarisation umfassen.

11. Einheit gemäß einem der vorgenannten Ansprüche, **dadurch gekennzeichnet, dass** mindestens einige Bereiche, die der gleichen Gruppe entsprechen, geografisch voneinander entfernt sind.

12. Einheit gemäß einem der vorgenannten Ansprüche, **dadurch gekennzeichnet, dass** die Anzahl der Zonen in einer Gruppe zwischen eins und zehn beträgt.

13. Einheit gemäß einem der vorgenannten Ansprüche, **dadurch gekennzeichnet, dass** die Anzahl der Gruppen gleich vier beträgt.
